# EUROPEAN PATENT APPLICATION

(11) **EP 2 562 875 A1**
(43) Date of publication of application: **27.02.2013**
(21) Application number: 11178530.9
(22) Date of filing: 23.08.2011
(51) Int. Cl.: H01R 4/06, H01R 43/00

(54) **Pulling device for pulling a punch in a contact bush**

(71) Applicant: CEMBRE S.p.A., I-25135 Brescia (IT)
(72) Inventor: Barezzani, Gualtiero, I-25062 Concesio, Brescia (IT); Veglianti, Samuel, I-25135 Brescia (IT)
(74) Representative: Leihkauf, Steffen Falk

(57) **Abstract**

A pulling device (3) for pulling a punch (1) in a contact bush (2) comprises a counteraction portion (7), a punch connector (9) able to be connected to a connection portion (10) of the punch (1), as well as a pulling mechanism (11) connected with the counteraction portion (7) and with the punch connector (9) and suitable for moving the punch connector (9) with respect to the counteraction portion (7) in a hauling direction (17) along a pulling axis (6) wherein the punch connector (9) comprises at least two clamping jaws (12) able to move along the pulling axis (6), between an open position, in which the clamping jaws (12) are apart from one another to receive and free the connection portion (10), and a closed position, in which the clamping jaws (12) are brought together to clamp the connection portion (10) of the punch (1).

## Description

The object of the present invention is a pulling device for pulling a punch in a contact bush.

Such pulling devices are usually used for the application of permanent electrical contacts to portions of metal walls, in particular of the web of railway lines and the like, in which a bush made from electrically conductive material with an axial through hole is inserted in a hole made in the wall portion and a punch with an expansion portion and a threaded connection portion is inserted in the axial hole of the bush and pulled through such an axial hole to generate a radial expansion of the bush such as to anchor it stably to the hole. In the case of so-called "permanent punches", the punch is not pulled completely through the axial hole of the bush, but rather it is pulled only for a certain distance sufficient to generate the radial expansion of the bush and to plant the punch itself firmly in the expanded axial hole. In this case, the punch forms an integral part of the electrical contact made.

Considering these two methods of application, in the present description the term "pull the punch in the axial hole or in the bush" we refer both to hauling the punch through the axial hole of the bush and to forcibly hauling it in the bush.

In order to pull the punch in the axial hole of the bush, it is known to use pulling devices, for example hydraulic jacks with a counteraction portion and a punch connector connected to a pulling mechanism suitable for pulling the punch connector with respect to the counteraction portion. The punch connector is threaded to allow the screwing of the threaded connection portion of the punch.

The pulling devices of the prior art have the drawback that the screwing of the connection portion of the punch in the punch connector is difficult to carry out with protective gloves and it requires undesirably long amounts of time.

The purpose of the present invention is therefore to propose a pulling device for pulling a punch in a contact bush, having characteristics such as to avoid the drawbacks quoted with reference to the prior art.

A particular purpose of the present invention is to propose a pulling device for pulling a punch in a contact bush, which allows quick and easy connection to the punch that can also be carried out with protective gloves.

These and other purposes are accomplished through a pulling device for pulling a punch in a contact bush according to claim 1.

In accordance with an aspect of the invention, a pulling device for pulling a punch in a contact bush comprises:
- a front side intended to face towards the punch during use, a rear side opposite the front side and a pulling axis;
- a counteraction portion;
- a punch connector adapted to be connected to a connection portion of the punch, as well as a pulling mechanism connected with the counteraction portion and with the punch connector and suitable for moving the punch connector with respect to the counteraction portion in a hauling direction along the pulling axis;
wherein the punch connector comprises:
- at least one or more locking surfaces formed in one or more clamping jaws movable between an open position, in which the locking surfaces are detached from the connection portion to disconnect it from the punch connector, and a closed position, in which the locking surfaces engage the connection portion of the punch to connect it to the punch connector,
- at least one thrusting surface that interacts with said one or more clamping jaws so that, in response to a movement of the thrusting surface, the clamping jaw(s) move from the closed position into the open position or vice-versa, in which the locking surfaces of the clamping jaws are threaded.

Thanks to this particular configuration of the punch connector, the punch is adapted to be coupled with and decoupled from the pulling device through a simple movement of the clamping jaws from their open position into their closed position and vice-versa. Moreover, thanks to the shape in threaded sectors of the locking surfaces, the pulling device allows electrical contact to be quickly made with permanent punches without damaging the threading of the permanent punch and allowing its double use in the step of making the contact and to fix the electrical connector to the contact.

In accordance with a further aspect of the invention, the clamping jaws are elastically biased towards the closed position, so that the movement of the clamping jaws into the closed position happens automatically and quickly.

In accordance with a further aspect of the present invention, the clamping jaws can be moved into the open position through the insertion between them of the connection portion of the punch in which they are sufficiently wide open to receive the connection portion completely and close around it.

In order to better understand the invention and appreciate its advantages, some non-limiting example embodiments will be described hereafter, with reference to the attached figures, in which:
- figure 1 is a perspective view of a pulling device with punch coupled according to an embodiment of the invention;

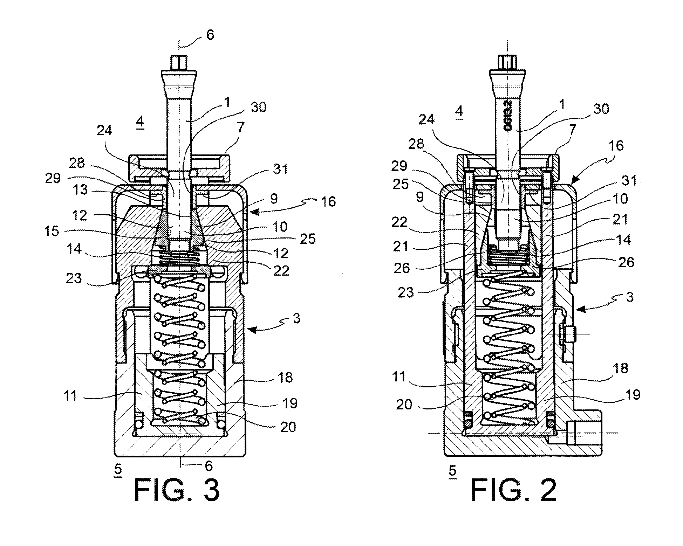

- figure 2 is a longitudinal section view of the pulling device in figure 1;
- figure 3 is a further longitudinal section view of the pulling device in figure 1, according to a section plane perpendicular to the section plane of figure 2;
- figure 4 is a perspective view of a detail of the device;
- figures 5A and 5B are side views of a punch connector of the pulling device in an open position and in a closed position;
- figures 6, 7 and 8 are section views of the pulling device that illustrate a sequence of coupling with a punch;
- figure 9 is a section view of the pulling device that pulls the punch through a contact bush;

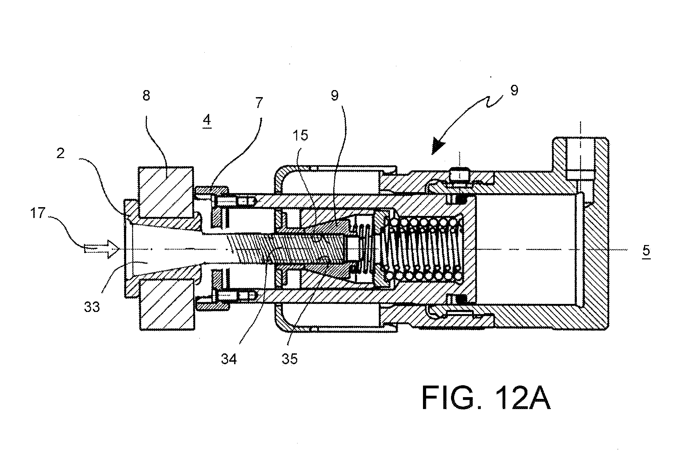

- figures 10, 11 and 12 are section views of the pulling device that illustrate a sequence of decoupling of the punch from the pulling device;
- figure 12A is a section view of the pulling device that engages a permanent punch according to an embodiment of the invention;
- figure 13 is a front view of a connection portion of the pulling device according to an alternative embodiment;
- figure 14 is a section view according to the line XIV-XIV in figure 13;
- figure 15 is a section view according to the line XV-XV in figure 13;
- figure 16 is a perspective view of a possible punch connection portion for the pulling device according to the embodiment in figure 13.

With reference to the figures, a pulling device for pulling a punch 1 through a contact bush 2 is wholly indicated with reference numeral 3.

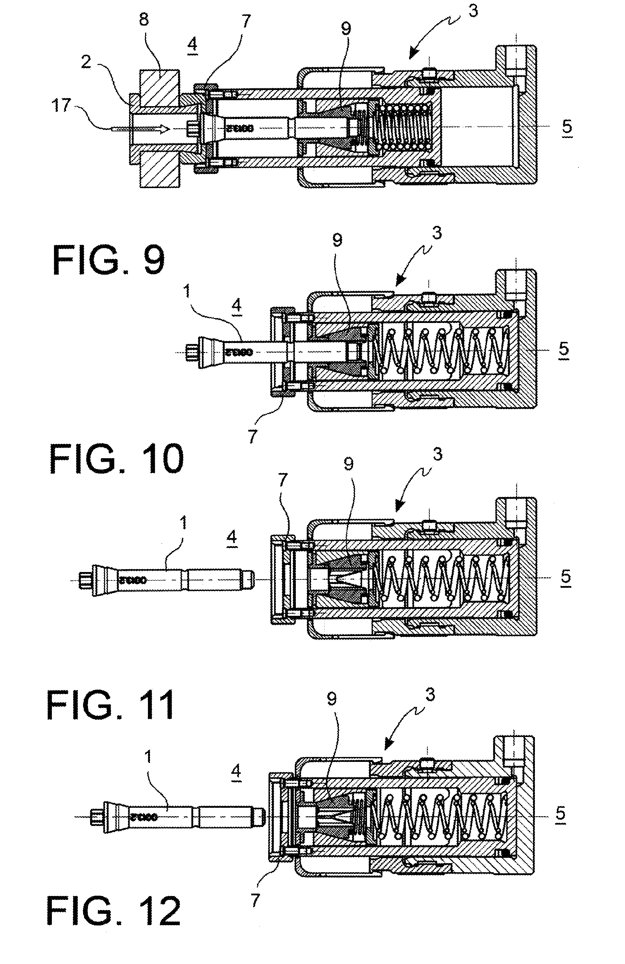

The pulling device 3 has a front side 4 intended to face towards the punch 1 and the contact bush 2 during use, a rear side 5 opposite the front side 4 and a pulling axis 6 and it comprises a counteraction portion 7 intended to rest directly or indirectly against a portion of wall 8 to which it is wished to apply the contact bush 2 or against such a contact bush 2, a punch connector 9 adapted to be connected to a connection portion 10 of the punch 1, as well as a pulling mechanism 11 connected with the counteraction portion 7 and with the punch connector 9 and suitable for pulling or moving the punch connector 9 with respect to the counteraction portion 7 in a hauling direction, indicated by the arrow 17 in figure 9, along the pulling axis 6.

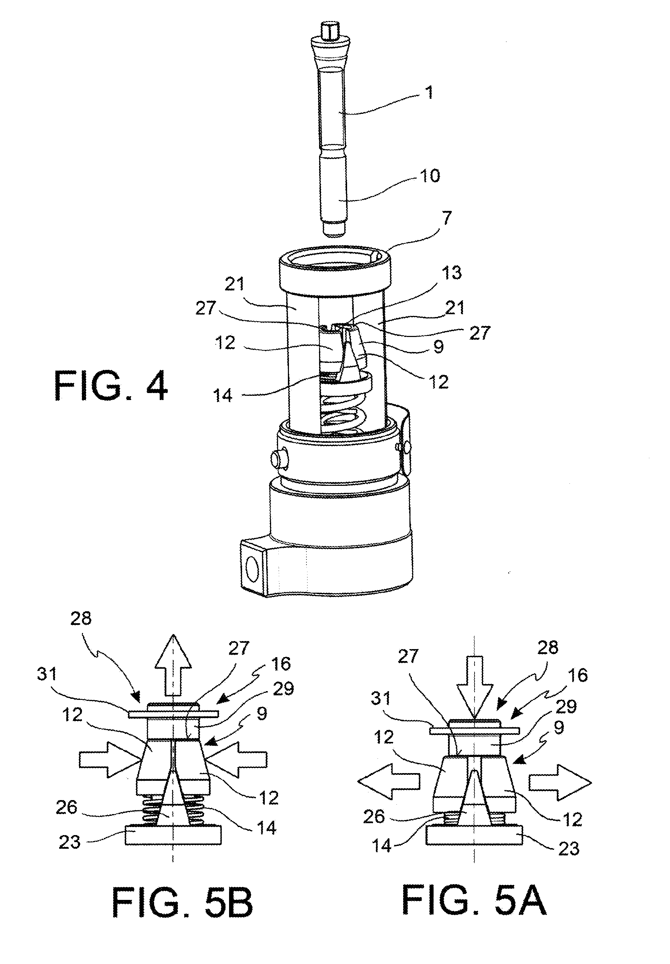

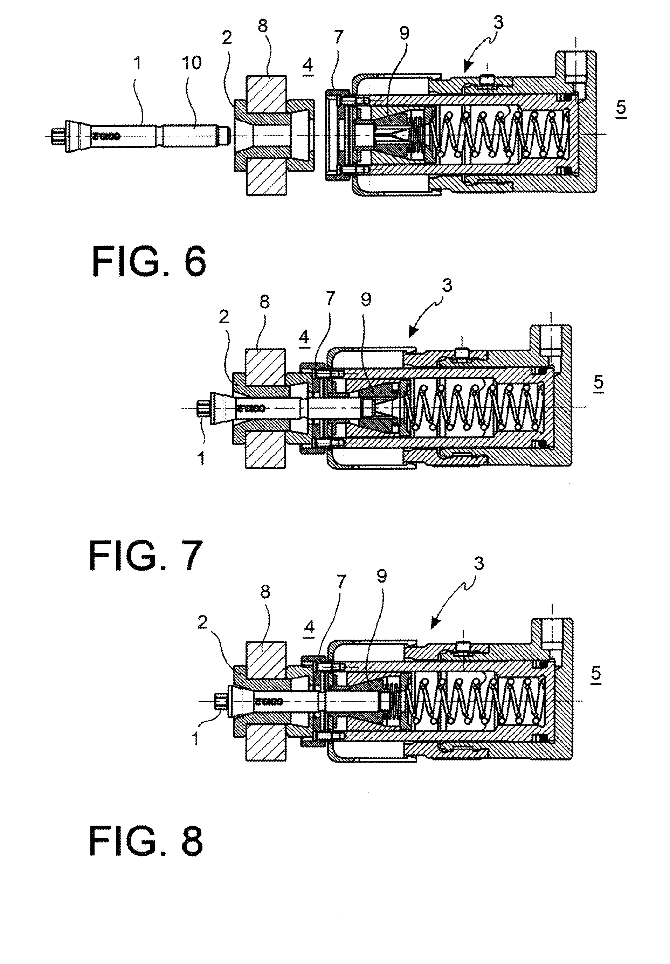

The punch connector 9 comprises at least two clamping jaws 12 movable along a direction of insertion of the connection portion 10, which coincides with the pulling axis 6, between an open position (figures 5A and 7), in which the clamping jaws 12 are apart from one another to receive and free the connection portion 10 of the punch 1, and a closed position (figures 5B and 8), in which the clamping jaws 12 are brought together to clamp the connection portion 10 of the punch 1.

Thanks to this particular configuration of the punch connector, the punch can be coupled with and decoupled from the pulling device through a simple movement of the clamping jaws from their open position into their closed position and vice-versa.

In accordance with an embodiment, the clamping jaws 12 are elastically biased, for example through a closing spring 14, towards the closed position, so that the movement of the clamping jaws 12 into the closed position happens automatically and quickly.

In accordance with a further embodiment, the clamping jaws 12 are configured to be movable into the open position through the insertion between them of the connection portion 10 of the punch 1 that moves the clamping jaws 12 against the elastic force of the closing spring 14 up to the point in which the jaws 12 are sufficiently spread apart to receive the connection portion 10 completely and close around it.

This advantageously allows the punch 1 to be coupled with the pulling device 3, by pushing the punch 1 simply in the connector seat 13 formed by the clamping jaws 12.

Moreover, an inner surface of the clamping jaws 12 that forms the aforementioned locking surfaces 15, intended to engage the connection portion 10 of the punch 1, can be threaded or knurled so as to make a shape coupling with punches equipped with a threaded connection portion 10. It is thus advantageously possible to use the pulling device of the present invention with a so-called permanent punch 1 having an expansion ogive 33 suitable for expanding the contact bush 2 and being planted permanently in the expanded contact bush 2, as well as a threaded web 34 projecting from the expansion ogive 33 and that forms the aforementioned connection portion 10 and also acts as a threaded web adapted to be engaged by a nut to clamp a connector of an electrical conductor to the contact bush 2. This allows the same threading 35 of the threaded web 34 to be used both for engagement with the clamping jaws 12 during the creation of the contact and to receive a nut to clamp a connector of an electrical conductor to the contact bush 2. Thanks to the threading of the locking surface 15 of the clamping jaws 12, the threading 35 of the permanent punch is engaged through a geometric shape coupling that is substantially matching and preferably completely matching, which does not damage such a threading 35, which can thus be reused for the electrical connection.

In order to have matching shapes of the locking surfaces 15 of the clamping jaws 12 and the threading 35 engaged by it (so as not to cause damage or deformations to the threading 35 itself that could jeopardise the subsequent screwing of the nut to clamp the connector of the electrical conductor), the locking surfaces 15 of the clamping jaws 12 form threading sectors, the pitch and angle of inclination of which are equal to the pitch and angle of inclination of the threading 35 of the threaded web 34.

In accordance with an alternative embodiment, in order to avoid damage to the threading 35, the locking surfaces 15 of the clamping jaws 12 could form toothed sectors, in which the single projections of the toothed sectors are positioned so that (when the jaws are in the closed position around the threaded web 34) they engage the threading 35 of the threaded web 34 only at its bottom and not at the crest.

In accordance with an embodiment, the pulling device 3 comprises a manually actuated release device 16, suitable for moving the clamping jaws 12 into the open position to release the connection portion 10 of the punch 1.

With reference to the embodiment illustrated in the figures, the pulling mechanism 11 comprises a cylinder 18-hydraulic piston 19 group, the piston 19 of which is connected with the counteraction portion 7 (here formed from a counteraction ring) through two connection shafts 21 and elastically biased (return spring 20) into a rest position (figure 8). By actuating the pulling mechanism, the pressure of the hydraulic fluid moves the piston 19 against the force of the return spring 20 from the rest position towards the front side 4 of the device 1 (figure 9), so as to move the counteraction portion 7 in the direction of the front side 4 with respect to the punch connector 9 connected in a stationary manner with the cylinder 18.

The punch connector 9 comprises a support cage 22 that internally receives the clamping jaws 12 and that comprises a rear wall 23 facing towards the rear side 5 of the device 1, a front opening 24 facing towards the front side of the device 1 and foreseen for the insertion of the connection portion 10 of the punch 1, as well as a lateral guide wall 25 that defines an inner space that narrows towards the front opening 24 so as to bring together the clamping jaws 12 when they move towards the front opening 24 (closed position, figures 5B and 8). One or more opening wedges 26 project from the rear wall 23, extending between the clamping jaws 12 and widening towards the rear side of the device 3, in other words in the direction of insertion of the punch 1, so as to move apart the clamping jaws 12 when they move towards the rear wall 23 (open position, figures 5A and 7). In this embodiment, the closing spring 14 can be arranged preloaded under pressure between the rear wall 23 and a rear surface of the clamping jaws 12.

Preferably, the inner surface of the lateral guide wall 25 and the corresponding outer surfaces of the clamping jaws 12 are partially frusto-conical.

The clamping jaws 12 also have a front thrusting surface 27 facing towards the front side of the device 1, against which thrusting surface abuts both the connection portion 10 during its insertion and a thrusting member 28 of the manual release device 16 during manual release to thrust the clamping jaws 12 into the open position.

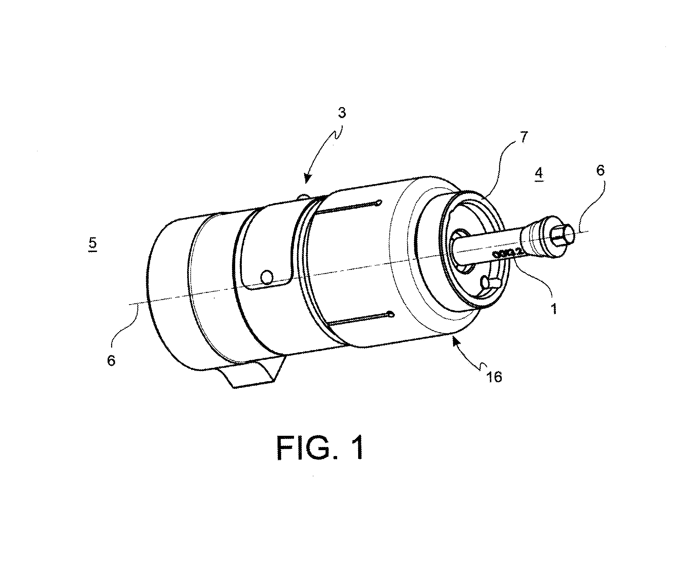

The manual release device 16 advantageously comprises a thrusting member 28 with a tubular portion 29 insertable into the front opening 24 of the support cage 22 to thrust the clamping jaws into the open position and that defines a central opening 30 for the passage of the connection portion 10 of the punch 1. Around the tubular portion 29 it is possible to form a flange 31 that forms a surface for supporting the thrusting member 28 against the support cage 22 as well as a seat for the connection of the thrusting member 28 with a release handle 32. The release handle 32 preferably, but not necessarily, is shaped like a cup or bell that covers the front part of the device 3 (see figure 1) and that can easily be gripped with protective gloves.

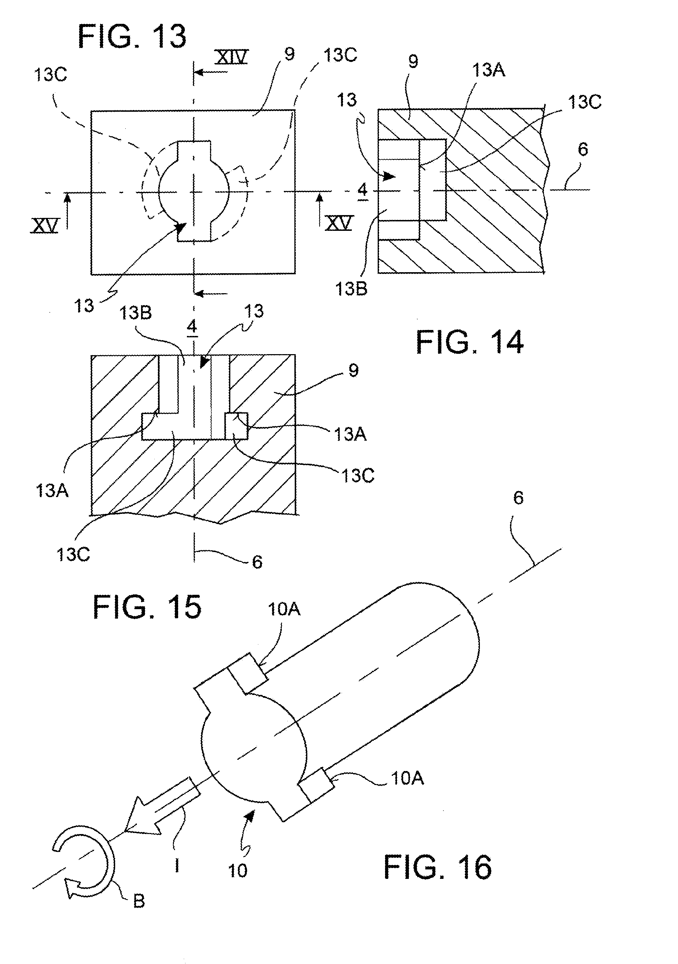

Alternatively and with reference to figures 13-16, it can be foreseen for the punch connector 9 to comprise a connector seat 13 that forms:
- a locking surface 13A transversal to the pulling axis 6 and suitable for engaging a corresponding surface 10A of the connection portion 10,
- an insertion track 13B extending from the locking surface 13A towards the front side 4 and configured so as to guide the connection portion 10 in the connector seat 13 through an insertion movement I and without contact with the locking surface 13A,
- a locking track 13C connected with the insertion track 13B and configured so as to guide the connection portion 10 in engagement with the locking surface 13A through a non-repetitive locking movement B different from the insertion movement I, in particular through a locking movement transversal to the insertion movement or through a rotary locking movement of less than or equal to 180°, preferably less than or equal to 90°.

Of course, a man skilled in the art can bring further modifications and variants to the pulling device 3 according to the present invention in order to satisfy contingent and specific requirements, all of which are in any case covered by the scope of protection of the invention, as defined by the following claims.

## Claims

1. Pulling device (3) for pulling a punch (1) in a contact bush (2) comprising:
- a front side (4) intended to face towards the punch (1) during use, a rear side (5) opposite the front side (4) and a pulling axis (6);
- a counteraction portion (7);
- a punch connector (9) adapted to be connected to a connection portion (10) of the punch (1), as well as a pulling mechanism (11) connected with the counteraction portion (7) and with the punch connector (9) and suitable for moving the punch connector (9) with respect to the counteraction portion (7) in a hauling direction (17) along the pulling axis (6);
wherein the punch connector (9) comprises:
- at least one or more locking surfaces (15) formed in one or more clamping jaws (12) movable between an open position, in which the locking surfaces (15) are detached from the connection portion (10) to disconnect it from the punch connector (9), and a closed position, in which the locking surfaces (15) engage the connection portion (10) of the punch (1) to connect it to the punch connector (9),
- at least one thrusting surface (27) that interacts with said one or more clamping jaws (12) so that, in response to a movement of the thrusting surface (27), the clamping jaw(s) (12) move from the closed position into the open position or vice-versa, in which the locking surfaces (15) of the clamping jaws (12) are threaded.

2. Pulling device (3) according to claim 1, wherein said clamping jaws (12) can be moved along the pulling axis (6), between said open position, in which the clamping jaws (12) are away from one another to receive and free the connection portion (10), and said closed position, in which the clamping jaws (12) are brought together to clamp the connection portion (10).

3. Pulling device (3) according to claim 1 or 2, wherein the clamping jaws (12) are elastically biased towards said closed position.

4. Pulling device (3) according to claim 3, wherein the clamping jaws (12) can be moved into the open position through a thrust by the connection portion (10) against said clamping jaws (12).

5. Pulling device (3) according to any one of the previous claims, comprising a manually actuated release device (16) which is adapted to displace the clamping jaws (12) in said open position for releasing the connection portion (10) of the punch (1).

6. Pulling device (3) according to any one of the previous claims, wherein said punch connector (9) comprises:
- a support cage (22) that internally receives the clamping jaws (12) and that comprises a rear wall (23) facing towards the rear side (5) of the device (1), a front opening (24) facing towards the front side (4) of the device (1) and foreseen for the insertion of the connection portion (10), as well as a lateral guide portion (25) that defines an inner space that narrows towards the front opening (24) so as to bring together the clamping jaws (12) when they move towards the front opening (24),
- one or more opening wedges (26) that extend between the clamping jaws (12) and widen towards the rear side (5) of the device (3), so as to move apart the clamping jaws (12) when they move towards the rear wall (23).

7. Pulling device (3) according to any one of the previous claims, wherein the clamping jaws (12) comprise a thrusting surface (27) facing towards the front side (4) of the device (1) and configured to be engaged both by the connection portion (10) during its insertion and by a thrusting member (28) of a manual release device (16) during manual release to thrust the clamping jaws (12) into the open position.

8. Pulling device (3) according to claims 7 and 8, wherein said manual release device (16) comprises a thrusting member (28) with a tubular portion (29) insertable in the front opening (24) of the support cage (22) to thrust said clamping jaws (12) into the open position, said thrusting member (28) having a central opening (30) for the passage of the connection portion (10) of the punch 1.

9. Pulling device (3) according to claim 8, wherein around the tubular portion (29) a flange (31) is formed for supporting the thrusting member (28) against the support cage (22) and that connects the thrusting member (28) with a release handle (32).

10. Pulling device (3) according to claim 9, wherein said release handle (32) is shaped like a cup or bell that partially covers the front part of the pulling device (3).

11. System for quickly making electrical contacts, comprising a permanent punch (1) and a pulling device (3) for pulling the permanent punch (1) in a contact bush (2),
wherein the pulling device (3) comprises:
- a front side (4) intended to face towards the punch (1) during use, a rear side (5) opposite the front side (4) and a pulling axis (6);
- a counteraction portion (7);
- a punch connector (9) adapted to be connected to a connection portion (10) of the punch (1), as well as a pulling mechanism (11) connected with the counteraction portion (7) and with the punch connector (9) and suitable for moving the punch connector (9) with respect to the counteraction portion (7) in a hauling direction (17) along the pulling axis (6);
wherein the punch connector (9) comprises:
- at least one or more locking surfaces (15) formed in one or more clamping jaws (12) movable between an open position, in which the locking surfaces (15) are detached from the connection portion (10) to disconnect it from the punch connector (9), and a closed position, in which the locking surfaces (15) engage the connection portion (10) of the punch (1) to connect it to the punch connector (9),
- at least one thrusting surface (27) that interacts with said one or more clamping jaws (12) so that, in response to a movement of the thrusting surface (27), the one or more clamping jaws (12) move from the closed position into the open position or vice-versa,
wherein the permanent punch (1) comprises an expansion ogive (33) suitable for expanding a contact bush (2) and for being permanently planted in the expanded contact bush (2), as well as a threaded web (34) projecting from the expansion ogive (33) and forming the connection portion (10) adapted to be engaged by the clamping jaws (12), wherein said same threaded web can be engaged by a nut to clamp a connector of an electrical conductor to the contact bush (2),
wherein the locking surfaces (15) of the clamping jaws (12) form threading sectors suitable for engaging the threaded web (34).

12. System according to claim 11, wherein the threaded web 34 has a threading (35) having a shape matching the locking surfaces (15) of the clamping jaws (12).

13. System according to claim 11, wherein the pitch and angle of inclination of the threads of the threading sectors are equal to the pitch and angle of inclination of the threading (35) of the threaded web (34).

14. System for quickly making electrical contacts, comprising a permanent punch (1) and a pulling device (3) for pulling the permanent punch (1) in a contact bush (2),
wherein the pulling device (3) comprises:
- a front side (4) intended to face towards the punch (1) during use, a rear side (5) opposite the front side (4) and a pulling axis (6);
- a counteraction portion (7);
- a punch connector (9) adapted to be connected to a connection portion (10) of the punch (1), as well as a pulling mechanism (11) connected with the counteraction portion (7) and with the punch connector (9) and suitable for moving the punch connector (9) with respect to the counteraction portion (7) in a hauling direction (17) along the pulling axis (6);
wherein the punch connector (9) comprises:
- at least one or more locking surfaces (15) formed in one or more clamping jaws (12) movable between an open position, in which the locking surfaces (15) are detached from the connection portion (10) to disconnect it from the punch connector (9), and a closed position, in which the locking surfaces (15) engage the connection portion (10) of the punch (1) to connect it to the punch connector (9),
- at least one thrusting surface (27) that interacts with said one or more clamping jaws (12) so that, in response to a movement of the thrusting surface (27), the clamping jaw(s) (12) move from the closed position into the open position or vice-versa,
wherein the permanent punch (1) comprises an expansion ogive (33) suitable for expanding a contact bush (2) and for being permanently planted in the expanded contact bush (2), as well as a threaded web (34) projecting from the expansion ogive (33) and forming the connection portion (10) adapted to be engaged by the clamping jaws (12), wherein said same threaded web can be engaged by a nut to clamp a connector of an electrical conductor to the contact bush (2),
wherein the locking surfaces (15) of the clamping jaws (12) form toothed sectors the projections of which are positioned so that they engage a threading (35) of the threaded web (34) only at its bottom and not at the crest of the thread.

15. Method for quickly making electrical contacts, comprising:
- making a hole in a railway rail;
- inserting a contact bush with an axial through hole into the hole made in the rail;
- inserting a punch with an expansion portion and a threaded connection portion into the axial hole of the contact bush;
- expanding the contact bush in the hole of the rail and planting the expansion portion permanently in the expanded contact bush through the steps of:
- engaging the threaded connection portion of the punch through locking surfaces (15) of clamping jaws (12) of a pulling device according to claim 1;
- actuating the pulling device to pull the punch in the bush;
- clamping a connector of an electrical conductor to the contact bush through screwing of a nut onto the same threaded connection portion of the punch that has been previously engaged by the locking surfaces (15) of the pulling device.
